# EUROPÄISCHE PATENTANMELDUNG

(11) **EP 1 408 226 A2**
(43) Veröffentlichungstag der Anmeldung: **14.04.2004**
(21) Anmeldenummer: 03019335.3
(22) Anmeldetag: 27.08.2003
(51) Int. Cl.: F02M 27/02

(54) **Zerstäubungsanordnung**

(30) Priorität: 07.10.2002 DE 10246696
(71) Anmelder: ROBERT BOSCH GMBH, 70442 Stuttgart (DE)
(72) Erfinder: Miller, Frank, 74360 Ilsfeld (DE); Albrodt, Hartmut, 71732 Tamm (DE)

(57) **Zusammenfassung**

Eine Zerstäubungsanordnung (1) für Kraftstoffe, insbesondere zum Eintrag in einen chemischen Reformer zur Gewinnung von Wasserstoff, umfaßt ein Brennstoffeinspritzventil (2) und ein Zerstäuberrohr (3) mit Abspritzöffnungen (6), die in einen Zumeßraum ausmünden, und zumindest eine Dosieröffnung (5). Im Zerstäuberrohr (3) zwischen der Dosieröffnung (6) und den Abspritzöffnungen (6) ist zumindest ein Einsatz (7) angeordnet.

## Beschreibung

### Stand der Technik

Die Erfindung geht aus von einer Zerstäubungsanordnung nach der Gattung des Hauptanspruchs.

Bei brennstoffzellengestützten Transportsystemen kommen zur Gewinnung des benötigten Wasserstoffs aus kohlenwasserstoffhaltigen Kraftstoffen sog. chemische Reformer bzw. Zur Bereitstellung der Reaktionstemperatur katalytischer Brenner oder Nachbrenneinrichtungen zum Einsatz.

Alle vom Reformer zum Reaktionsablauf benötigten Stoffe wie z.B. Luft, Wasser und Kraftstoff werden idealerweise dem Reformer in gasförmigem Zustand zugeführt. Da aber die Kraftstoffe , wie z.B. Methanol oder Benzin, und Wasser an Bord des Transportsystems vorzugsweise in flüssiger Form vorliegen, müssen sie erst, kurz bevor sie dem Reformer zugeführt werden, erhitzt werden, um sie zu verdampfen. Dies erfordert einen (Vor-)verdampfer (separat oder integriert), der in der Lage ist, die entsprechenden Mengen an gasförmigem Kraftstoff und Wasserdampf zur Verfügung zu stellen.

Die für die chemische Reaktion, in welcher beispielsweise der Kraftstoff unter anderem zu Wasserstoff reformiert wird, notwendige Temperatur wird durch sogenannte Katbrenner zur Verfügung gestellt. Katbrenner sind Komponenten, welche mit einem Katalysator beschichtete Flächen aufweisen. In diesen katalytischen Brennern wird das Kraftstoff/Luftgemisch in Wärme und Abgase gewandelt, wobei die entstehende Wärme beispielsweise über die Mantelflächen und/oder über den warmen Abgasstrom an die entsprechenden Komponenten, wie beispielsweise den chemischen Reformer oder einen Verdampfer, geführt wird.

Die Umsetzung des Kraftstoffs in Wärme ist stark von der Größe der Kraftstofftröpfchen, welche auf die katalytische Schicht auftreffen, abhängig. Je kleiner die Tröpfchengröße ist und je gleichmäßiger die katalytische Schicht mit den Kraftstofftröpfchen benetzt wird, desto vollständiger wird der Kraftstoff in Wärme gewandelt und desto höher ist der Wirkungsgrad. Der Kraftstoff wird so zudem schneller umgesetzt und Schadstoffemissionen gemindert. Zu große Kraftstofftröpfchen führen zu einer Belegung der katalytischen Schicht und damit zu einer nur langsamen Umsetzung. Dieses führt insbesondere in der Kaltstartphase beispielsweise zu einem schlechten Wirkungsgrad.

Da der Wasserstoff zumeist sofort verbraucht wird, müssen die chemischen Reformer in der Lage sein, die Produktion von Wasserstoff verzögerungsfrei, z.B. bei Lastwechseln oder Startphasen, an die Nachfrage anzupassen. Insbesondere in der Kaltstartphase müssen zusätzliche Maßnahmen ergriffen werden, da der Reformer keine Abwärme bereitstellt. Konventionelle Verdampfer sind nicht in der Lage, die entsprechenden Mengen an gasförmigen Reaktanden verzögerungsfrei zu erzeugen.

Es ist daher sinnvoll, den Kraftstoff durch eine Zerstäubungseinrichtung in feinverteilter Form in den Reformer einzubringen, wobei, bei ausreichendem Wärmeangebot, der Verdampfungsprozeß durch die hohe Oberfläche des feinverteilten Kraftstoffs verbessert wird.

Beispielsweise sind aus der US 3,971,847 Vorrichtungen zur Eindosierung von Kraftstoffen in Reformer bekannt. Der Kraftstoff wird hier von vom Reformer relativ weit entfernten Zumeßeinrichtungen über lange Zuführungsleitungen und eine einfache Düse in einen temperierten Stoffstrom zugemessen. Dabei trifft der Kraftstoff zuerst auf Prallbleche, die nach der Austrittsöffnung der Düse angeordnet sind, welche eine Verwirbelung und Verteilung des Kraftstoffs bewirkten sollen, und gelangt dann über eine relativ lange Verdampfungsstrecke, welche für den Verdampfungsprozeß notwendig ist, in den Reaktionsbereich des Reformers. Durch die lange Zuführungsleitung kann die Zumeßeinrichtung von thermischen Einflüssen des Reformers isoliert werden.

Nachteilig bei den aus der obengenannten Druckschrift bekannten Vorrichtungen ist insbesondere, daß durch die einfache Konstruktion der Düse und die Anordnung der Prallbleche eine gezielte Eindosierung von Kraftstoff, beispielsweise in Bereiche des Reformers mit großem Wärmeangebot, nur unzureichend möglich ist. Dies führt zu einem relativ großen Raumbedarf durch die Notwendigkeit einer langen und voluminösen Verdampfungsstrecke.

Außerdem ergeben sich im Kaltstartbetrieb Probleme, da sich lange und voluminöse Verdampfungsstrecken nur langsam aufheizen und zudem relativ viel Wärme ungenutzt abgeben. Durch die in der US 3,971,847 offenbarten Anordnungen von Düse und Prallblechen ist es insbesondere nicht möglich, eine Hohlzylinderinnenfläche gleichmäßig mit Kraftstoff zu benetzen, dabei bestimmte Flächen des Hohlzylinders von der Benetzung mit Kraftstoff auszunehmen oder die Menge des eindosierten Kraftstoffs der Verteilung des Wärmeangebots im Zumeßraum anzupassen. Auch die Form der durch den Zumeßvorgang entstehenden Kraftstoffwolke kann nur unzureichend beeinflußt werden.

### Vorteile der Erfindung

Die erfindungsgemäße Zerstäubungsanordnung mit den kennzeichnenden Merkmalen des Hauptanspruchs hat demgegenüber den Vorteil, daß durch eine geeignete Gestaltung und Anordnung eines Einsatzes im Zerstäuberrohr der Kraftstoff entsprechend dem im Zumeßraum herrschenden Wärmeangebot eingebracht werden kann, ohne die Wände des Zerstäuberrohres auf unterschiedlichen Ebenen zu benetzen und dadurch die Zerstäubung zu beeinträchtigen.

Durch die in den Unteransprüchen aufgeführten Maßnahmen sind vorteilhafte Weiterentwicklungen der im Hauptanspruch angegebenen Zerstäubungsanordnung möglich.

Vorteilhafterweise ist der Einsatz in einfacher Weise im Zerstäuberrohr beispielsweise mittels Einpressen, Löten oder Schweißen, insbesondere Laserschweißen, montierbar.

Weiterhin ist von Vorteil, daß als Einsätze beispielsweise Spritzlochscheiben aus Brennstoffeinspritzventilen verwendbar sind.

Die Durchtrittsöffnung des Einsatzes ist vorteilhafterweise deckungsgleich mit der Dosierstelle des Zerstäuberrohres, so daß der Kraftstoffstrom ungehindert passieren kann.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: eine schematische Schnittdarstellung eines Ausführungsbeispiels einer erfindungsgemäßen Zerstäubungsanordnung in einer Gesamtansicht; und
- Fig. 2: eine schematische Schnittdarstellung des in der in Fig. 1 dargestellten Zerstäubungsanordnung angeordneten Einsatzes.

### Beschreibung des Ausführungsbeispiels

Nachfolgend wird ein Ausführungsbeispiel der Erfindung unter Bezugnahme auf die Zeichnung beispielhaft beschrieben.

Das nachfolgend beschriebene Ausführungsbeispiele einer erfindungsgemäß ausgestalteten Zerstäubungsanordnung 1 ermöglicht eine einfache Dosierung und Zerstäubung in heißer Atmosphäre bei robuster Konstruktion, Anwendung in unterschiedlichen räumlichen Konstellationen und Einsatz von Standard-Niederdruck-Brennstoffeinspritzventilen.

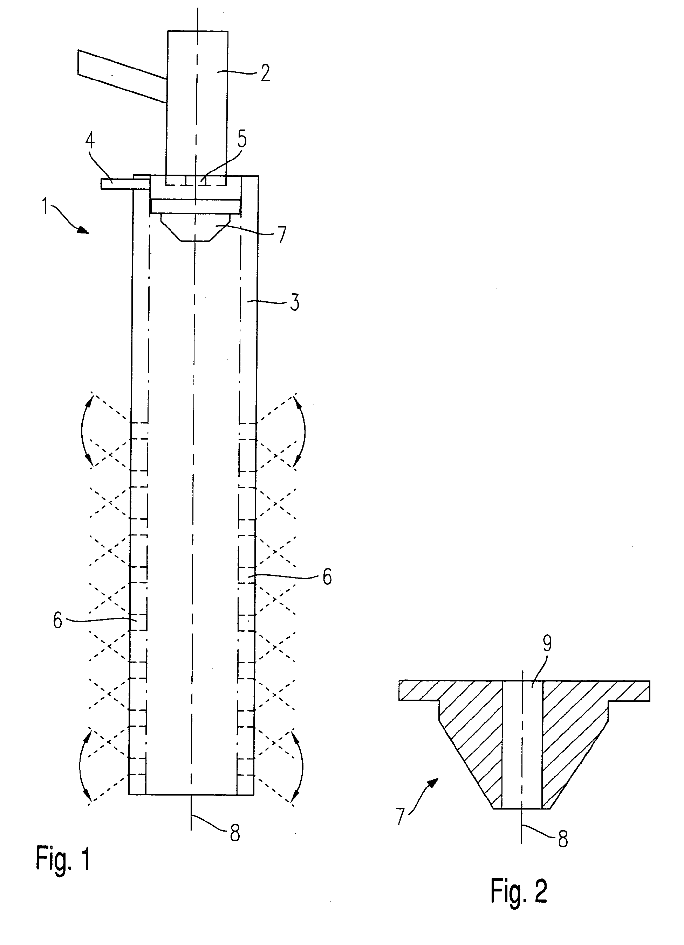

Das in Fig. 1 schematisiert in einer Gesamtdarstellung gezeigte Ausführungsbeispiel der erfindungsgemäßen Zerstäubungsanordnung 1 ist in der Form einer Zerstäubungsanordnung 1 für die Verwendung von Niederdruck-Brennstoffeinspritzventilen 2 ausgeführt. Die Zerstäubungsanordnung 1 eignet sich insbesondere zum Eintrag und zur Zerstäubung von Kraftstoff in einen nicht dargestellten chemischen Reformer zur Gewinnung von Wasserstoff.

Die erfindungsgemäße Zerstäubungsanordnung 1 weist in diesem Ausführungsbeispiel ein hohlzylindrisches Zerstäuberrohr 3 mit einer zu einer Mittelachse 8 des Zerstäuberrohrs 3 mittig angeordneten Dosieröffnung 5 auf. Seitlich kann unter einem beliebigen Winkel eine Luftzufuhr 4 angebracht sein, welche im Bereich der Dosieröffnung 5 dem eingespritzten Kraftstoff Luft zuführt.

Das Zerstäuberrohr 3 weist im Ausführungsbeispiel mehrere, in den Wänden in beliebigen Positionen ausgebildete Abspritzöffnungen 6 auf, durch welche das Kraftstoff-Luft-Gemisch in weitere, nicht dargestellte Komponenten der Brennstoffzelle eingebracht wird.

Erfindungsgemäß weist die Zerstäubungsanordnung 1 einen Einsatz 7 auf. Der Einsatz 7 ist dabei abströmseitig der Dosierstelle 5 und zuströmseitig der Abspritzöffnungen 6 angeordnet. Im dargestellten Ausführungsbeispiel ist der Einsatz dabei deutlich näher an der Dosierstelle 5 als an den Abspritzöffnungen 6 angeordnet.

Fig. 2 zeigt in einer schematischen Schnittdarstellung den in Fig. 1 mit 7 bezeichneten Einsatz.

Der Einsatz 7 weist dabei eine im Ausführungsbeispiel mittenparallele Durchtrittsöffnung 9 auf, welche sich mit der Mittelachse 8 des Zerstäuberrohres 3 und der Dosieröffnung 5 deckt. Der Einsatz 7 ist dabei im Bereich des Außenumfangs mit dem Zerstäuberrohr 3 so dichtend gefügt, daß zwischen Zerstäuberrohr 3 und Außenumfang des Einsatzes 7 kein Kraftstoff oder Gas hindurchdringen kann. Die Verbindung zwischen dem Einsatz 7 und dem Zerstäuberrohr 3 kann dabei beispielsweise durch Laserschweißen oder eine andere geeignete Methode geschaffen werden. Der Einsatz 7 kann auch eingepreßt werden. Als Düsenkörpereinsätze 7 eigenen sich beispielsweise Spritzlochscheiben.

Die Durchtrittsöffnung 9 des Einsatzes 7 ist als Bohrung mit einem beispielsweise runden Querschnitt ausgeführt. Der Kraftstoff wird durch die Dosieröffnung 5, in diesem Ausführungsbeispiel durch ein Niederdruck-Brennstoffeinspritzventil 2, in die Zerstäubungsanordnung 1 bzw. das Zerstäuberrohr 3 zugemessen und strömt dann in einer Kraftstoffströmungsrichtung, welche entlang der Mittelachse 8 des Zerstäuberrohres 3 verläuft, an der Luftzufuhr 4, durch welche Restgase und/oder Luft in das Zerstäuberrohr 3 geführt werden, vorbei zum Einsatz 7. Der Kraftstoff bzw. das Kraftstoff-Gas-Gemisch tritt dann durch die Durchtrittsöffnung 9 hindurch, wonach der Kraftstoff bzw. das Kraftstoff-Gas-Gemisch durch die Abspritzöffnungen 6 in einen nicht dargestellten Zumeßraum abgespritzt wird.

Vorteil der beschriebenen Anordnung eines einzelnen Einsatzes 7 im Zerstäuberrohr 3 ist neben der einfachen Herstell- und Montierbarkeit insbesondere die Verbesserung der Zerstäubungsqualität und die Mediengleichverteilung.

Die Erfindung ist nicht auf das beschriebene Ausführungsbeispiel beschränkt und ist für beliebige andere Zerstäubungsanordnungen anwendbar.

## Patentansprüche

1. Zerstäubungsanordnung (1) für Kraftstoffe, insbesondere zum Eintrag in einen chemischen Reformer zur Gewinnung von Wasserstoff, mit einem Brennstoffeinspritzventil (2) und einem Zerstäuberrohr (3) mit Abspritzöffnungen (6), die in einen Zumeßraum ausmünden, und zumindest einer Dosieröffnung (5) ,
**dadurch gekennzeichnet,**
**daß** im Zerstäuberrohr (3) zwischen der Dosieröffnung (5) und den Abspritzöffnungen (6) zumindest ein Einsatz (7) angeordnet ist.

2. Zerstäubungsanordnung nach Anspruch 1,
**dadurch gekennzeichnet,**
**daß** das Zerstäuberrohr (3) hohlzylindrisch ist.

3. Zerstäubungsanordnung nach Anspruch 1 oder 2,
**dadurch gekennzeichnet,**
**daß** am Zerstäuberrohr (3) zwischen der Dosieröffnung (5) und dem Einsatz (7) eine Luftzufuhr (4) angeordnet ist.

4. Zerstäuberdüse nach einem der Ansprüche 1 bis 3,
**dadurch gekennzeichnet,**
**daß** der zumindest eine Einsatz (7) mit dem Zerstäuberrohr (3) hydraulisch dicht verpreßt und/oder verschweißt, insbesondere laserverschweißt, ist.

5. Zerstäubungsanordnung nach einem der Ansprüche 1 bis 4,
**dadurch gekennzeichnet,**
**daß** eine Durchtrittsöffnung (9) des Einsatzes (7) parallel zu einer Mittelachse (8) des Zerstäuberrohres (3) verläuft.

6. Zerstäubungsanordnung nach Anspruch 5,
**dadurch gekennzeichnet,**
**daß** der Querschnitt der Durchtrittsöffnung (9) des Einsatzes (7) konstant über ihre Länge ist.

7. Zerstäubungsanordnung nach Anspruch 5 oder 6,
**dadurch gekennzeichnet,**
**daß** die Durchtrittsöffnung (9) des Einsatzes (7) einen runden Querschnitt aufweist.

8. Zerstäubungsanordnung nach einem der Ansprüche 5 bis 7,
**dadurch gekennzeichnet,**
**daß** die Dosieröffnung (5) und die Durchtrittsöffnung (9) des Einsatzes (7) auf einer gemeinsamen Achse liegen.
